# EUROPÄISCHE PATENTSCHRIFT

(11) **EP 3 865 248 B1**
(45) Veröffentlichungstag und Bekanntmachung des Hinweises auf die Patenterteilung: **08.06.2022**
(21) Anmeldenummer: 21154237.8
(22) Anmeldetag: 29.01.2021
(51) Int. Cl.: B23Q 7/14, B23K 26/38, B23K 37/04, B23K 26/08, B23K 37/02, B23Q 7/03

(54) **MASCHINELLE ANORDNUNG ZUM BEARBEITEN VON PLATTENARTIGEN WERKSTÜCKEN, INSBESONDERE VON BLECHEN**
MECHANICAL ASSEMBLY FOR PROCESSING BOARD-SHAPED WORKPIECES, IN PARTICULAR MADE OF SHEET METAL
AGENCEMENT MÉCANIQUE DESTINÉ À L'USINAGE DE PIÈCES EN FORME DE PLAQUE, EN PARTICULIER DES TÔLES

(30) Priorität: 12.02.2020 DE 102020103600
(43) Veröffentlichungstag der Anmeldung: 18.08.2021
(73) Patentinhaber: TRUMPF Werkzeugmaschinen GmbH + Co. KG, 71254 Ditzingen (DE)
(72) Erfinder: Knobel, Carsten, 02681 Wilthen (DE); Witte, Robert, 04808 Lossatal (DE)
(74) Vertreter: Kohler Schmid Möbus Patentanwälte

(56) Entgegenhaltungen:
- EP-A1- 1 362 808
- EP-A1- 3 064 314
- EP-A1- 3 156 175

## Beschreibung

Die Erfindung betrifft eine maschinelle Anordnung zum Bearbeiten von plattenartigen Werkstücken, insbesondere von Blechen,
- mit einer Bearbeitungsvorrichtung, die einen Arbeitsbereich aufweist, in welchem ein Werkstück für die Bearbeitungsvorrichtung zur Bearbeitung zugänglich ist,
- mit einer Werkstückpalette, die einen Palettenrahmen sowie ein Auflageelement aufweist, das an dem Palettenrahmen angebracht und zur Lagerung eines Werkstücks während der Werkstückbearbeitung und/oder zur Lagerung von Produkten der Werkstückbearbeitung ausgebildet ist,
- mit einem Traggestell für die Werkstückpalette, an welchem die Werkstückpalette mit einer gestellseitigen Position im Arbeitsbereich der Bearbeitungsvorrichtung anordenbar ist sowie
- mit einer Transfervorrichtung für die Werkstückpalette, mittels derer die Werkstückpalette relativ zu dem Traggestell für die Werkstückpalette mit einer Transferbewegung zwischen einer Position außerhalb des Arbeitsbereichs der Bearbeitungsvorrichtung und der gestellseitigen Position im Arbeitsbereich der Bearbeitungsvorrichtung transferierbar ist.

Eine derartige maschinelle Anordnung ist offenbart in DE 10 2015 220 185 A1 (oder EP 3 156 175 A1).

Diese Druckschrift betrifft eine Werkzeugmaschine zum Bearbeiten von Blechen, mit einem Arbeitsbereich, in dem als Vorrichtung für die Blechbearbeitung eine Laserschneidvorrichtung angeordnet ist. Mit Hilfe eines Palettenwechslers wird eine mit einem zu bearbeitenden Blech beladene Werkstückpalette dem Arbeitsbereich der Werkzeugmaschine zugeführt. Nach der Blechbearbeitung wird die mit Bearbeitungsprodukten beladene Werkstückpalette mittels des Palettenwechslers aus dem Arbeitsbereich der Werkzeugmaschine entnommen. Die Werkstückpalette weist einen rechteckigen Palettenrahmen mit Laufrollen sowie an dem Palettenrahmen starr angebrachte Auflageleisten für zu bearbeitende Bleche und für Produkte der Blechbearbeitung auf. Die Bewegungen der Werkstückpalette werden mittels eines motorischen Antriebs des Palettenwechslers erzeugt. Beim Transfer der Werkstückpalette in den Arbeitsbereich der Werkzeugmaschine schiebt der motorische Antrieb des Palettenwechslers die Werkstückpalette von einer vor dem Arbeitsbereich angeordneten Tragstruktur auf ein im Innern des Arbeitsbereichs angeordnetes Traggestell für die Werkstückpalette. Dabei rollt die Werkstückpalette mit den an dem Palettenrahmen vorgesehenen Laufrollen über zugeordnete Bewegungsbahnen an dem Traggestell, bis die Werkstückpalette im Innern des Arbeitsbereichs eine definierte Zielposition erreicht hat. In der Zielposition verbleibt die Werkstückpalette, bis die mittels der Laserschneidvorrichtung der Werkzeugmaschine durchgeführte Bearbeitung des auf der Werkstückpalette abgelegten Blechs beendet ist. Das Blech behält während der Bearbeitung seine Position auf der in der Zielposition angeordneten Werkstückpalette bei. Nach Abschluss der Bearbeitung wird die Werkstückpalette mittels des motorischen Antriebs des Palettenwechslers von dem Traggestell im Innern des Arbeitsbereichs der Werkzeugmaschine zurück auf die Tragstruktur vor dem Arbeitsbereich gezogen.

Die Funktionalität der vorbekannten maschinellen Anordnung zu erweitern, ist Aufgabe der vorliegenden Erfindung.

Erfindungsgemäß gelöst wird diese Aufgabe durch die maschinelle Anordnung gemäß Patentanspruch 1.

Im Falle der Erfindung ist als Werkstückpalette eine aktive Werkstückpalette vorgesehen. Die aktive Werkstückpalette zeichnet sich dadurch aus, dass das zur Lagerung von Werkstücken und/oder zur Lagerung von Produkten der Werkstückbearbeitung dienende Auflageelement der Werkstückpalette an dem Palettenrahmen der Werkstückpalette in einer Zustellrichtung bewegbar geführt ist und dass das Auflageelement bei Anordnung der Werkstückpalette im Arbeitsbereich der Bearbeitungsvorrichtung der maschinellen Anordnung mittels eines Auflageantriebs mit einer Zustellbewegung relativ zu dem Palettenrahmen und damit auch relativ zu dem Arbeitsbereich und/oder relativ zu der in dem Arbeitsbereich angeordneten Bearbeitungsvorrichtung bewegt werden kann. Das Auflageelement kann insbesondere mit Auflageleisten versehen sein, die zur Ablage eines zu bearbeitenden Werkstücks und/oder von Produkten der Werkstückbearbeitung ausgebildet sind.

Bewegungen des Auflageelements können beispielsweise zur Erzeugung von Bearbeitungsbewegungen eines auf dem Auflageelement gelagerten Werkstücks relativ zu der Bearbeitungsvorrichtung ausgeführt werden. Ergänzend oder alternativ besteht die Möglichkeit, durch eine Bewegung des Auflageelements ein auf dem Auflageelement abgelegtes Werkstück im Vorfeld der Bearbeitung und/oder auf dem Auflageelement abgelegte Produkte der Werkstückbearbeitung im Anschluss an die Bearbeitung im Arbeitsbereich der maschinellen Anordnung zu bewegen. Im Anschluss an die Werkstückbearbeitung ausgeführte Bewegungen des Auflageelements können beispielsweise dazu dienen, auf dem Auflageelement gelagerte Bearbeitungsprodukte aus dem Arbeitsbereich der maschinellen Anordnung zu entladen. Insbesondere kann die aktive Werkstückpalette einen Materialfluss durch den Arbeitsbereich der maschinellen Anordnung ermöglichen.

Ist die Antriebsfunktion der aktiven Werkstückpalette nicht aktiviert, kann die aktive Werkstückpalette in gleicher Weise wie die im Falle des Standes der Technik vorgesehene passive Werkstückpalette eingesetzt werden.

Die für die aktive Werkstückpalette vorgesehene Transfervorrichtung erlaubt es im Bedarfsfall auch, die aktive Werkstückpalette aus dem Arbeitsbereich der maschinellen Anordnung zu entnehmen. Eine Entnahme der aktiven Werkstückpalette aus dem Arbeitsbereich der maschinellen Anordnung ist etwa erforderlich, um im Arbeitsbereich der maschinellen Anordnung angeordnete Funktionseinheiten zugänglich zu machen, die bei in die gestellseitige Position in dem Arbeitsbereich transferierter Werkstückpalette durch letztere verdeckt sind. Als derartige Funktionseinheiten in Frage kommen unter anderem Einrichtungen zur Reststoffentsorgung oder Einrichtungen zur Schadstoffabsaugung während eines Bearbeitungsprozesses. Überdies kann die aktive Werkstückpalette auch zur Durchführung von Wartungs- und/oder von Reparaturarbeiten, beispielsweise zum Austausch von Auflageleisten, aus dem Arbeitsbereich der maschinellen Anordnung zu entnehmen sein. Der Arbeitsbereich der maschinellen Anordnung kann eine Einhausung aufweisen, die gegebenenfalls mit einer oder mehreren Öffnungen versehen ist, durch welche der Transfer der Werkstückpalette erfolgen kann. Eine Einhausung für den Arbeitsbereich mit Vorrichtungen zum Strahlschutz ist an erfindungsgemäßen maschinellen Anordnungen für die Laserbearbeitung von Werkstücken vorgesehen.

Besondere Ausführungsarten der maschinellen Anordnung gemäß Patentanspruch 1 ergeben sich aus den abhängigen Patentansprüchen 2 bis 15.

Im Falle der Erfindungsbauart gemäß Patentanspruch 2 weist der Auflageantrieb einen von der Werkstückpalette getrennten Auflageantriebsmotor auf. Aufgrund der Trennung von der Werkstückpalette muss der Auflageantriebsmotor Bewegungen der Werkstückpalette nicht mitvollziehen. Vielmehr kann der Auflageantriebsmotor stationär angeordnet sein, während die Werkstückpalette etwa mittels der Transfervorrichtung bewegt wird. Ein einzelner Auflageantriebsmotor kann an verschiedenen Werkstückpaletten das Auflageelement mit einer Zustellbewegung antreiben. Ist die Werkstückpalette an dem Traggestell in die gestellseitige Position in dem Arbeitsbereich der Bearbeitungsvorrichtung transferiert, befindet sich ein zwischen dem Auflageantriebsmotor und dem Auflageelement vorgesehenes Auflageelementgetriebe in einem Funktionszustand, in welchem das Auflageelementgetriebe zwischen dem Auflageantriebsmotor und dem Auflageelement eine Antriebsverbindung herstellt, aufgrund derer der Auflageantriebsmotor das Auflageelement mit einer Zustellbewegung antreiben kann. In den Funktionszustand wird das Auflageelementgetriebe geschaltet, indem ein motorseitiges Getriebeelement und ein auflageelementseitiges Getriebeelement des Auflageelementgetriebes miteinander gekuppelt werden.

In entsprechender Weise und mit entsprechenden Vorteilen umfasst an der erfindungsgemäßen maschinellen Anordnung gemäß Patentanspruch 3 ein Transferantrieb der Transfervorrichtung für die Werkstückpalette einen von der Werkstückpalette getrennten Transferantriebsmotor. Zwischen dem Transferantriebsmotor und der Werkstückpalette ist ein in einen Funktionszustand und in einen Außerfunktionszustand schaltbares Transfergetriebe vorgesehen, das seinerseits ein motorseitiges und außerdem ein palettenseitiges Getriebeelement aufweist. Bei Funktionszustand des Transfergetriebes sind das motorseitige und das palettenseitige Getriebeelement des Transfergetriebes miteinander gekuppelt. Aufgrund der deshalb bestehenden Antriebsverbindung zwischen dem Transferantriebsmotor und der Werkstückpalette ist der Transferantriebsmotor in der Lage, die Werkstückpalette mit einer Transferbewegung anzutreiben.

Ausweislich Patentanspruch 4 ist in Weiterbildung der Erfindung das Transfergetriebe bei deaktiviertem Auflageelementgetriebe aktiviert und/oder das Auflageelementgetriebe ist bei deaktiviertem Transfergetriebe aktiviert. Bei der Transferbewegung der Werkstückpalette steht folglich das Auflageelement still. Befindet sich die Werkstückpalette an dem Traggestell in der gestellseitigen Position im Arbeitsbereich der Bearbeitungsvorrichtung sind der Transferantrieb der Werkstückpalette deaktiviert und der Auflageantrieb in einem Funktionszustand, in welchem er das Auflageelement mit einer Zustellbewegung relativ zu dem Palettenrahmen der Werkstückpalette antreiben kann.

In bevorzugter Ausgestaltung der Erfindung gelangen ausweislich Patentanspruch 5 aufgrund der Transferbewegung der Werkstückpalette in die gestellseitige Position im Arbeitsbereich der Bearbeitungsvorrichtung das Transfergetriebe der erfindungsgemäßen maschinellen Anordnung in einen Außerfunktionsbereitschaftszustand und das Auflageelementgetriebe der erfindungsgemäßen maschinellen Anordnung in einen Funktionsbereitschaftszustand. Mit Einlaufen der Werkstückpalette in die Zielposition in dem Arbeitsbereich der Bearbeitungsvorrichtung bedarf es nur noch eines auslösenden Ereignisses, beispielsweise eines Schaltvorgangs, um das Transfergetriebe des Transferantriebs für die Werkstückpalette zu deaktivieren und das Auflageelementgetriebe für die Erzeugung einer Zustellbewegung des Auflageelements zu aktivieren.

Die Erfindungsbauart gemäß Patentanspruch 6 zeichnet sich insbesondere durch eine hinsichtlich der Anzahl der benötigten Bauteile optimierte und folglich platzsparende und kostengünstige Bauweise aus. Ein und derselbe Antriebsmotor erzeugt Zustellbewegungen des Auflageelements der Werkstückpalette und Transferbewegungen der Werkstückpalette. Ein dem Auflageelementgetriebe und dem Transfergetriebe gemeinsames motorseitiges Getriebeelement wird wahlweise zur Herstellung einer Antriebsverbindung zwischen dem gemeinsamen Antriebsmotor und dem Auflageelement oder zur Herstellung einer Antriebsverbindung zwischen dem gemeinsamen Antriebsmotor und der Werkstückpalette verwendet.

In weiterer bevorzugter Ausgestaltung der Erfindung ist gemäß Patentanspruch 7 als gemeinsames motorseitiges Getriebeelement des Auflageelementgetriebes und des Transfergetriebes ein gemeinsames motorseitiges Antriebsrad vorgesehen. Das palettenseitige Getriebeelement des Transfergetriebes umfasst eine dem gemeinsamen motorseitigen Antriebsrad zugeordnete palettenseitige Antriebsstange, die an der Werkstückpalette angebracht ist und dort in der Richtung der zu erzeugenden Transferbewegung verläuft. Das auflageelementseitige Getriebeelement des Auflageelementgetriebes wird seinem originären Zweck entsprechend genutzt, um zwischen dem gemeinsamen Antriebsmotor des Auflageantriebs und des Transferantriebs einerseits und dem Auflageelement andererseits eine Antriebsverbindung herzustellen. Darüber hinaus bildet das auflageelementseitige Getriebeelement des Auflageelementgetriebes aber auch einen zusätzlich zu der palettenseitigen Antriebsstange vorgesehenen zusätzlichen Teil des palettenseitigen Getriebeelements des Transfergetriebes, indem das auflageelementseitige Getriebeelement des Auflageelementgetriebes eine sich in der Richtung der Transferbewegung erstreckende Verlängerung der Antriebsstange des Transfergetriebes ausbildet. In Abhängigkeit von seinem kinematischen Zustand übernimmt das auflageelementseitige Getriebeelement des Auflageelementgetriebes die eine oder die andere Funktion. Bei an dem Traggestell in die gestellseitige Position in dem Arbeitsbereich der Bearbeitungsvorrichtung transferierter Werkstückpalette ist das auflageelementseitige Getriebeelement des Auflageelementgetriebes in einen Bewegungszustand geschaltet, aufgrund dessen das auflageelementseitige Getriebeelement des Auflageelementgetriebes durch den gemeinsamen Antriebsmotor des Auflageantriebs und des Transferantriebs mit einer Bewegung angetrieben werden kann, aufgrund derer das mit dem auflageelementseitigen Getriebeelement des Auflageelementgetriebes antriebsverbundene Auflageelement eine Zustellbewegung ausführt. Bei der Transferbewegung der Werkstückpalette befindet sich das auflageelementseitige Getriebeelement des Auflageelementgetriebes in einem Stillstandszustand, in welchem das auflageelementseitige Getriebeelement des Auflageelementgetriebes eine Verlängerung der als weiterer Teil des palettenseitigen Getriebeelements des Transfergetriebes vorgesehenen palettenseitigen Antriebsstange ausbildet und als solche einen Beitrag zu der Antriebsverbindung zwischen dem gemeinsamen Antriebsmotor des Auflageantriebs und des Transferantriebs einerseits und der Werkstückpalette andererseits leistet. Im Bedarfsfall kann das auflageelementseitige Getriebeelement des Auflageelementgetriebes unmittelbar mit dem Einlaufen der Werkstückpalette in die Zielposition in dem Arbeitsbereich der Bearbeitungsvorrichtung aus dem Stillstandszustand in den Bewegungszustand geschaltet werden.

Die Patentansprüche 8 und 9 betreffen Ausführungsformen der Erfindung mit erfindungsgemäß bevorzugten Getriebebauarten.

Gemäß Patentanspruch 8 ist als auflageelementseitiges Getriebeelement des Auflageelementgetriebes ein an der Werkstückpalette um eine palettenseitige Antriebsradachse drehbares palettenseitiges Antriebsrad vorgesehen. Das palettenseitige Antriebsrad ist in besonderem Maße zum Zusammenwirken mit dem gemeinsamen motorseitigen Antriebsrad geeignet, welches das gemeinsame motorseitige Getriebeelement des Auflageelementgetriebes und des Transfergetriebes ausbildet. Ist das palettenseitige Antriebsrad aufgrund einer Blockade gegen eine Drehbewegung um die palettenseitige Antriebsradachse in den Stillstandszustand geschaltet, bildet das palettenseitige Antriebsrad die Verlängerung der an der Werkstückpalette angebrachten Antriebsstange des Transfergetriebes. Kann das palettenseitige Antriebsrad Drehbewegungen um die palettenseitige Antriebsradachse ausführen und befindet sich das palettenseitige Antriebsrad dementsprechend in dem Bewegungszustand, so stellt das palettenseitige Antriebsrad als Teil des im Funktionszustand befindlichen Auflageelementgetriebes eine Antriebsverbindung zwischen dem gemeinsamen Antriebsmotor des Auflageantriebs und des Transferantriebs einerseits und dem Auflageelement andererseits her.

Ausweislich Patentanspruch 9 werden die Zustellbewegungen des Auflageelements und die Transferbewegungen der Werkstückpalette mittels bewährter Zahnstangen- oder Triebstockantriebe erzeugt.

Gemäß den Patentansprüchen 10 und 11 ist das Auflageelement der erfindungsgemäßen maschinellen Anordnung vorzugsweise als an dem Palettenrahmen der Werkstückpalette in der Zustellrichtung endlos umlaufendes Auflageband ausgebildet. Auflageleisten, die zur Lagerung von zu bearbeitenden Werkstücken und/oder von Produkten der Werkstückbearbeitung ausgebildet sind, können an dem Auflageband insbesondere lösbar und folglich austauschbar angebracht sein. Von einem Auflageband mit Auflageleisten wird beispielsweise an erfindungsgemäßen maschinellen Anordnungen zur Laserbearbeitung von plattenartigen Werkstücken, insbesondere von Blechen, Gebrauch gemacht.

Als ein auflageelementseitiges Getriebeelement des Auflagebandantriebs ist vorzugsweise eine an der Werkstückpalette gelagerte Antriebsrolle vorgesehen, über welche das Auflageband geführt ist und die um eine Antriebsrollenachse antreibbar ist, die ihrerseits in Querrichtung der Zustellrichtung des Auflagebands verläuft. In der Zustellrichtung von der Antriebsrolle beabstandet ist eine Umlenkrolle für das Auflageband mit einer zu der Antriebsrollenachse parallelen Umlenkrollenachse angeordnet. Zur Anbindung der Antriebsrolle des Auflagebands an den Auflageantriebsmotor dient vorzugsweise ein palettenseitiges Antriebsrad, das an der Werkstückpalette um eine palettenseitige Antriebsradachse drehbar gelagert ist und insbesondere koaxial mit der Treibrolle des Auflagebands angeordnet sein kann.

Im Falle der Erfindungsbauart gemäß Patentanspruch 12 ist der in den Arbeitsbereich der Bearbeitungsvorrichtung transferierten aktiven Werkstückpalette in einer Materialflussrichtung eine Werkstückauflage vorgelagert und/oder eine Werkstückauflage nachgelagert. Vorzugsweise fluchten die Werkstückpalette und die vorgelagerte Werkstückauflage und/oder die nachgelagerte Werkstückauflage werkstückseitig miteinander in der Materialflussrichtung derart, dass zu bearbeitende Werkstücke und/oder Bearbeitungsprodukte in der Materialflussrichtung über die Werkstückauflage(n) und die Werkstückpalette bewegt werden können. Eine vorgelagerte Werkstückauflage kann unter anderem zum manuellen oder automatisierten Beschicken der in den Arbeitsraum der Bearbeitungsvorrichtung der erfindungsgemäßen maschinellen Anordnung transferierten Werkstückpalette mit zu bearbeitenden Werkstücken dienen. Über eine nachgelagerte Werkstückauflage lassen sich beispielsweise Produkte der Werkstückbearbeitung aus dem Arbeitsbereich der Bearbeitungsvorrichtung in der Materialflussrichtung entladen. Vorzugsweise sind sowohl die vorgelagerte Werkstückauflage als auch die nachgelagerte Werkstück-auflage gegebenenfalls außerhalb des Arbeitsbereichs der Bearbeitungsvorrichtung angeordnet. Als vorgelagerte Werkstückauflage und als nachgelagerte Werkstückauflage in Frage kommen beispielsweise Bandförderer und Rollenförderer, die motorisch angetrieben sein können.

Gemäß den Patentansprüchen 13 und 14 sind in weiterer bevorzugter Ausgestaltung der Erfindungen technische Maßnahmen getroffen, die es erlauben, die aktive Werkstückpalette ungeachtet des Vorhandenseins einer vorgelagerten Werkstückauflage und/oder einer nachgelagerten Werkstückauflage zwischen einer Position innerhalb und einer Position außerhalb des Arbeitsbereichs der Bearbeitungsvorrichtung der erfindungsgemäßen maschinellen Anordnung zu transferieren.

Die Erfindungsbauart gemäß Patentanspruch 15 zeichnet sich durch eine besondere anwendungsbezogene Flexibilität aus. Ohne dass es Änderungen an den übrigen Baugruppen der maschinellen Anordnung bedürfte, kann als Auflage für zu bearbeitende Werkstücke während der Werkstückbearbeitung und/oder als Auflage für Bearbeitungsprodukte der Werkstückbearbeitung wahlweise eine aktive Werkstückpalette oder eine originär passive Werkstückpalette verwendet werden. Bis auf diejenigen konstruktiven Merkmale, die für die Erzeugung von Zustellbewegungen des Auflageelements benötigt werden, kann die originär passive Werkstückpalette grundsätzlich mit der aktiven Werkstückpalette baugleich sein.

Nachfolgend wird die Erfindung anhand beispielhafter schematischer Darstellungen näher erläutert.

Es zeigen:
- Figur 1: eine maschinelle Anordnung für die Laserbearbeitung von Blechen, mit einem mit einer Einhausung versehenen Arbeitsbereich und mit einer in den Arbeitsbereich transferierten aktiven Werkstückpalette,
- Figur 2: die maschinelle Anordnung gemäß Figur 1 mit der aktiven Werkstückpalette außerhalb der Einhausung des Arbeitsbereichs,
- Figuren 3a, 3b: die aktive Werkstückpalette gemäß den Figuren 1 und 2,
- Figuren 4a, 4b: die aktive Werkstückpalette gemäß den Figuren 1 bis 3b beim Transfer zwischen einer Position außerhalb des Arbeitsbereichs und einer Zielposition innerhalb des Arbeitsbereichs der maschinellen Anordnung gemäß den Figuren 1 und 2,
- Figuren 5a, 5b: die aktive Werkstückpalette gemäß den Figuren 1 bis 3b in der Zielposition innerhalb des Arbeitsbereichs der maschinellen Anordnung gemäß den Figuren 1 und 2 und
- Figuren 6a, 6b: Darstellungen zur Veranschaulichung des grundsätzlichen Aufbaus und der grundsätzlichen Funktionsweise eines Auflageelementantriebs und eines Transferantriebs der aktiven Werkstückpalette gemäß den Figuren 1 bis 5b.

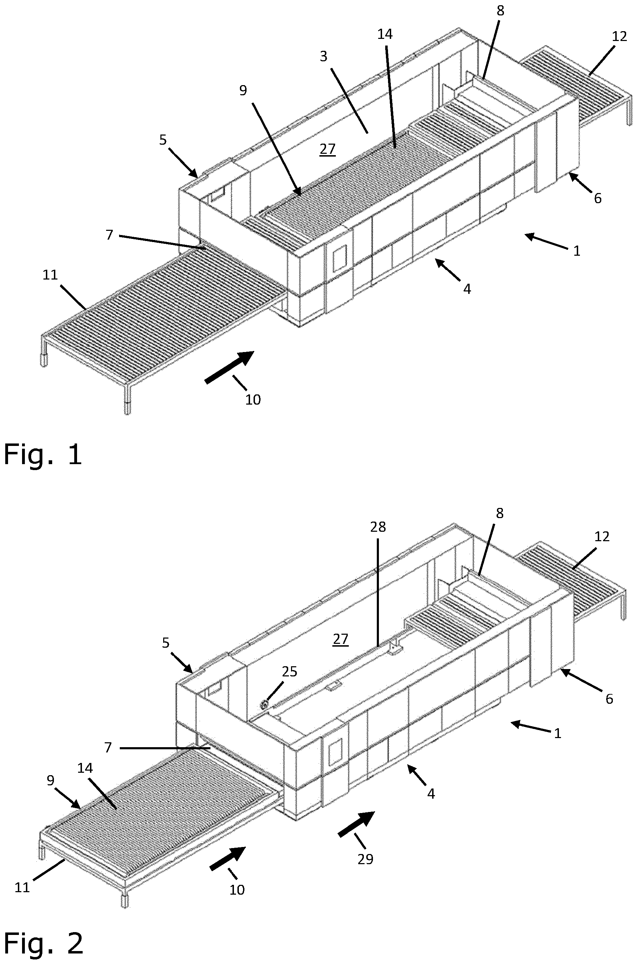

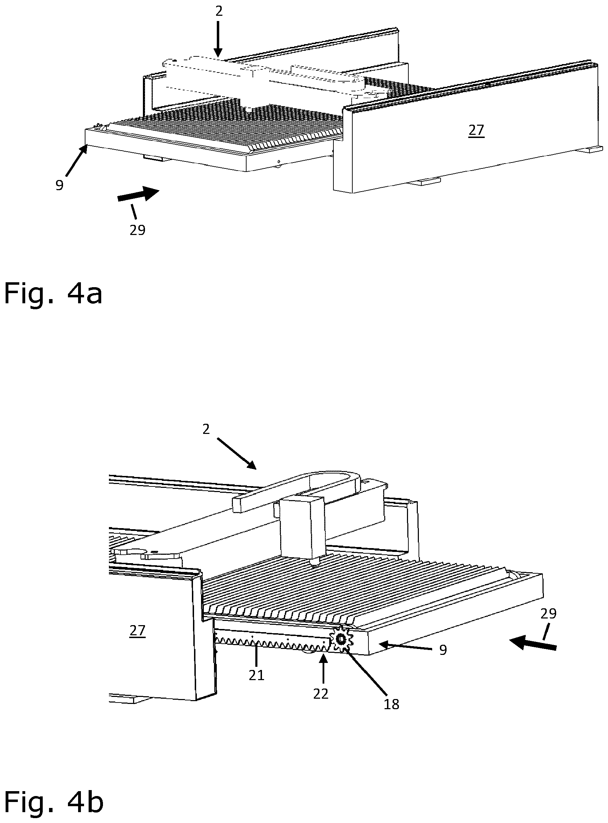

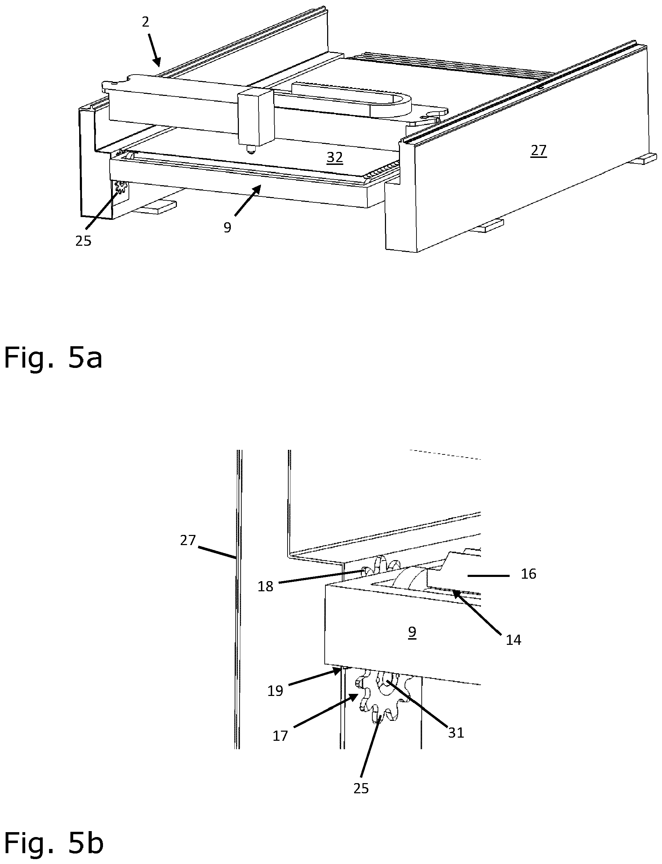

Die Figuren 1 und 2 zeigen eine stark schematische Gesamtansicht einer maschinellen Anordnung 1 zur schneidenden Bearbeitung von Blechen mittels Laser. Eine als Bearbeitungsvorrichtung vorgesehene Laserschneidvorrichtung 2 der maschinellen Anordnung 1 ist in den Figuren 4a, 5a dargestellt und in den Figuren 1 und 2 der Übersichtlichkeit halber weggelassen. Die Laserschneidvorrichtung 2 besitzt einen Arbeitsbereich 3, der von einer Einhausung 4 umschlossen ist. Mit einer beladeseitigen Strahlschutzschleuse 5 und einer entladeseitigen Strahlschutzschleuse 6 reicht die Einhausung 4 über den Arbeitsbereich 3 der Laserschneidvorrichtung 2 hinaus. Die beladeseitige Strahlschutzschleuse 5 ist mit einer Beschickungsöffnung 7, die entladeseitige Strahlschutzschleuse 6 mit einer Entladeöffnung 8 versehen. Mittels herkömmlicher Strahlschutzeinrichtungen wird verhindert, dass bei der Blechbearbeitung im Inneren der Einhausung 4 emittierte Laserstrahlung durch die Beschickungsöffnung 7 und die Entladeöffnung 8 aus der Einhausung 4 in deren Umgebung austritt.

In Figur 1 befindet sich die maschinelle Anordnung 1 in einem Bearbeitungsbereitschaftszustand. Dementsprechend ist in dem Arbeitsbereich 3 im Inneren der Einhausung 4 eine aktive Werkstückpalette 9 in einer definierten Position angeordnet. In einer Materialflussrichtung (Pfeil 10) sind der Werkstückpalette 9 im Betriebszustand der maschinellen Anordnung 1 gemäß Fig. 1 eine Werkstückauflage 11 vorgelagert und eine Werkstückauflage 12 nachgelagert. Sowohl bei der vorgelagerten Werkstückauflage 11 als auch bei der nachgelagerten Werkstückauflage 12 handelt es sich in dem dargestellten Beispielsfall um einen Rollentisch mit motorisch angetriebenen Förderrollen. An ihren Werkstückseiten fluchten die vorgelagerte Werkstückauflage 11, die Werkstückpalette 9 und die nachgelagerte Werkstückauflage 12 in Figur 1 miteinander in der Materialflussrichtung 10.

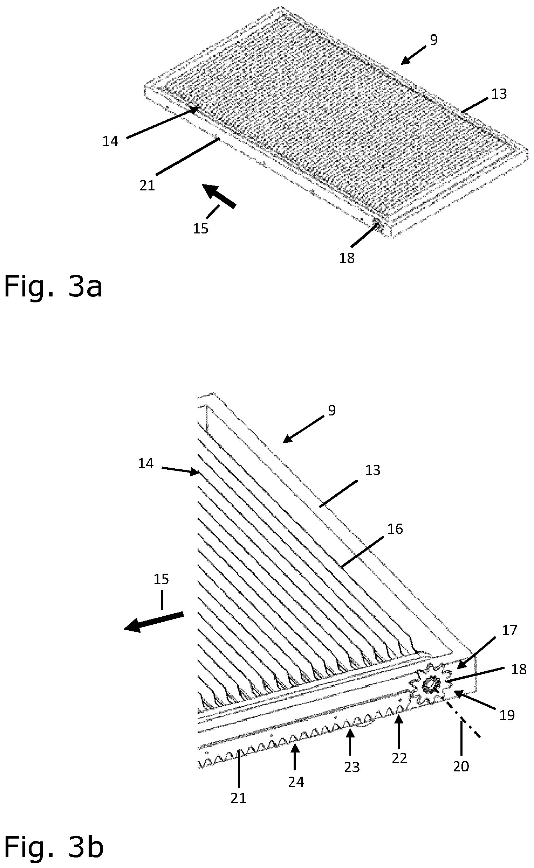

Die Werkstückpalette 9 ist im Einzelnen in den Figuren 3a und 3b dargestellt.

Die Werkstückpalette 9 umfasst einen rechteckigen Palettenrahmen 13 und ein Auflageband 14 als Auflageelement. Das Auflageband 14 ist an dem Palettenrahmen 13 in einer Zustellrichtung (Pfeil 15) geführt und läuft an dem Palettenrahmen 13 in der Zustellrichtung 15 endlos um. Auflageleisten 16 zur Lagerung von Blechen während deren Bearbeitung durch die Laserschneidvorrichtung 2 und zur Lagerung der bei der Blechbearbeitung erzeugten Bearbeitungsprodukte sind an dem Auflageband 14 parallel zueinander und dabei mit gegenseitigem Abstand in der Zustellrichtung 15 angeordnet.

Zur Erzeugung von Zustellbewegungen des Auflagebands 14 in der Zustellrichtung 15 dient ein Auflageantrieb 17, von dem in den Figuren 3a und 3b ein in einen Bewegungszustand geschaltetes palettenseitiges Triebstockrad 18 zu erkennen ist. Aufgrund seines Bewegungszustandes bildet das palettenseitige Triebstockrad 18 als palettenseitiges Antriebsrad ein auflageelementseitiges Getriebeelement eines Auflageelementgetriebes 19 aus.

Das palettenseitige Triebstockrad 18 ist an der Werkstückpalette 9, im Einzelnen an dem Palettenrahmen 13, um eine palettenseitige Antriebsradachse 20 drehbar gelagert. Mit einer in den Figuren 3a und 3b verdeckten Antriebsrolle für das Auflageband 14 ist das palettenseitige Triebstockrad 18 koaxial angeordnet und drehfest verbunden. An dem in der Zustellrichtung 15 gegenüberliegenden Ende des Palettenrahmens 13 wird das Auflageband 14 über eine in den Figuren gleichfalls durch das Auflageband 14 verdeckte Umlenkrolle geführt.

Mittels einer gesteuert schaltbaren Arretierungsvorrichtung, die in den Figuren ebenfalls nicht zu erkennen ist, kann der kinematische Zustand des palettenseitigen Triebstockrads 18 wahlweise von dem Bewegungszustand in einen Stillstandszustand oder von dem Stillstandszustand in den Bewegungszustand umgeschaltet werden.

Im Bewegungszustand ist das palettenseitige Triebstockrad 18 durch die Arretierungsvorrichtung für eine als Drehbewegung um die palettenseitige Antriebsradachse 20 ausgeführte auflageelementseitige Bewegung freigegeben. Mittels des in den Bewegungszustand überführten palettenseitigen Triebstockrads 18 wird die damit drehfest verbundene Antriebsrolle für das Auflageband 14 mit einer Drehbewegung um die palettenseitige Antriebsradachse 20 angetrieben. In Folge der Drehbewegung der Antriebsrolle führt das Auflageband 14 eine Zustellbewegung in der Zustellrichtung 15 aus.

Im Stillstandszustand ist das palettenseitige Triebstockrad 18 durch die Arretierungsvorrichtung gegen eine Drehbewegung um die palettenseitige Antriebsradachse 20 gesperrt. Das in diesem Fall drehfest an dem Palettenrahmen 13 angebrachte palettenseitige Triebstockrad 18 bildet dann gemeinsam mit einem als palettenseitige Antriebsstange an dem Palettenrahmen 13 befestigten palettenseitigen Triebstock 21 ein palettenseitiges Getriebeelement 22 eines Transfergetriebes 23, das seinerseits Teil eines Transferantriebs 24 für die Werkstückpalette 9 ist.

Der Transferantrieb 24 wird genutzt, um die Werkstückpalette 9 zwischen der in Figur 1 dargestellten Position innerhalb des Arbeitsbereichs 3 der Laserschneidvorrichtung 2 und der in Figur 2 gezeigten Position außerhalb des Arbeitsbereichs 3 zu transferieren.

In Figur 2 ist die vorgelagerte Werkstückauflage 11 mittels einer herkömmlichen Hubvorrichtung senkrecht zu der Materialflussrichtung 10 und einer in Figur 1 von der Werkstückpalette 9, der vorgelagerten Werkstückauflage 11 und der nachgelagerten Werkstückauflage 12 ausgebildeten gemeinsamen Werkstückauflageebene auf ein Niveau abgesenkt, bei welchem die vorgelagerte Werkstückauflage 11 von der Werkstückpalette 9 in der Materialflussrichtung 10 und in Gegenrichtung überfahren werden kann. In die Position gemäß Figur 2 wird die Werkstückpalette 9 beispielsweise zu Wartungszwecken, etwa zum Reinigen und/oder zum Austauschen von Auflageleisten 16 an dem Auflageband 14 transferiert. Außerdem ist bei der in Figur 2 dargestellten Position der Werkstückpalette 9 im Inneren der Einhausung 4 der maschinellen Anordnung 1 der in Figur 1 von der Werkstückpalette 9 überdeckte Bereich zugänglich. In diesem Bereich sind vorliegend Einrichtungen untergebracht, mittels derer bei der Blechbearbeitung anfallender Schneidabfall gesammelt und bearbeitungsbedingte Schadstoffe aus dem Arbeitsbereich 3 abgesaugt werden.

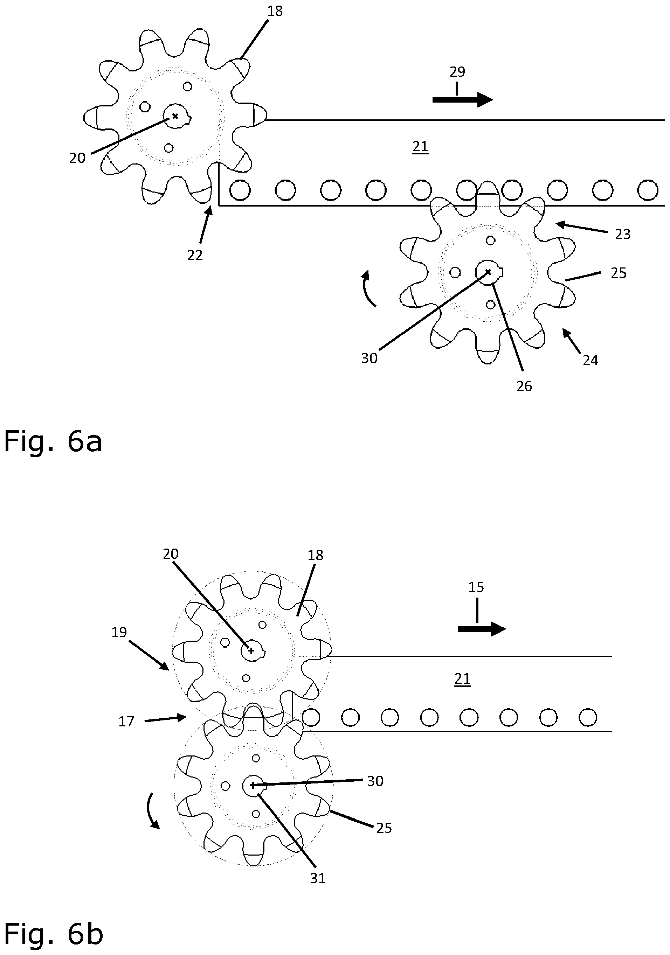

Das Transfergetriebe 23 des Transferantriebs 24 umfasst zusätzlich zu dem vorstehend beschriebenen und aus dem in den Stillstandszustand geschalteten palettenseitigen Triebstockrad 18 und dem palettenseitigen Triebstock 21 bestehenden palettenseitigen Getriebeelement 22 ein als motorseitiges Getriebeelement des Transfergetriebes 23 vorgesehenes motorseitiges Triebstockrad 25 (Figuren 2 und 6a). Angetrieben wird das motorseitige Triebstockrad 25 des Transfergetriebes 23 durch einen in dem vorliegenden Beispielsfall elektrischen Transferantriebsmotor 26 des Transferantriebs 24, von dem in Figur 6a lediglich die Motorwelle zu erkennen ist, auf welcher das motorseitige Triebstockrad 25 aufsitzt.

Der Transferantriebsmotor 26 mit dem motorseitigen Triebstockrad 25 ist von der Werkstückpalette 9 getrennt und stationär an einem im Inneren der Einhausung 4 angeordneten und im Einzelnen in den Figuren 4a bis 5b gezeigten Traggestell 27 für die Werkstückpalette 9 angeordnet. An dem Traggestell 27 verlaufen für die Werkstückpalette 9 beidseits Trag- und Führungsschienen 28, von denen in Figur 2 eine zu erkennen ist. Die Trag- und Führungsschienen 28 für die Werkstückpalette 9 setzen sich an der beladeseitigen Strahlschutzschleuse 5 und an der entladeseitigen Strahlschutzschleuse 6 fort. Bei Transferbewegungen bewegt sich die Werkstückpalette 9 mit an dem Palettenrahmen 13 drehbar gelagerten Rollen über die Trag- und Führungsschienen 28.

In der Position gemäß Figur 2 ist die außerhalb der Einhausung 4 angeordnete Werkstückpalette 9 gegenüber dem Arbeitsbereich 3 der maschinellen Anordnung 1 derart ausgerichtet, dass das in den Figuren 3a und 3b von dem palettenseitigen Triebstockrad 18 abliegende Längsende des palettenseitigen Triebstocks 21 des Transfergetriebes 23 zu dem Arbeitsbereich 3 hin weist.

Ausgehend von der Position gemäß Figur 2 wird die Werkstückpalette 9 manuell in einer mit der Materialflussrichtung 10 zusammenfallenden Richtung der Transferbewegung (Transferrichtung 29) vorgeschoben, bis das an dem Traggestell 27 angeordnete motorseitige Triebstockrad 25 des Transfergetriebes 23 mit den Triebstockbolzen an dem in der Transferrichtung 29 voreilenden Längsende des palettenseitigen Triebstocks 21 des Transfergetriebes 23 in Eingriff kommt und dadurch der Funktionszustand des Transfergetriebes 23 hergestellt wird. Nun wird der Transferantriebsmotor 26 mit einer entsprechenden Drehrichtung betätigt und das mittels des Transferantriebsmotors 26 um eine motorseitige Antriebsradachse 30 (Figuren 6a, 6b) angetriebene motorseitige Triebstockrad 25 schiebt das palettenseitige Getriebeelement 22 des Transfergetriebes 23 und mit diesem die Werkstückpalette 9 mit einer Bewegung in der Transferrichtung 29 in Richtung auf den Arbeitsbereich 3 der Laserschneidvorrichtung 2. Eine Momentaufnahme der mittels des Transferantriebs 24 in Richtung auf die Zielposition im Inneren der Einhausung 4 bewegten Werkstückpalette 9 ist in den Figuren 4a und 4b gezeigt.

Figur 6a zeigt die Verhältnisse gemäß den Figuren 4a, 4b stark schematisiert.

Das von dem Transferantriebsmotor 26 mit einer Drehbewegung um die Antriebsradachse 30 angetriebene motorseitige Triebstockrad 25 greift in den palettenseitigen Triebstock 21 des palettenseitigen Getriebeelements 22 an einer Stelle ein, die von dem gleichfalls an der Werkstückpalette 9 angebrachten palettenseitigen Triebstockrad 18 des palettenseitigen Getriebeelements 22 in der Transferrichtung 29 beabstandet ist. Das palettenseitige Triebstockrad 18 ist zu diesem Zeitpunkt mittels der hierfür vorgesehenen Arretierungsvorrichtung in den Stillstandszustand geschaltet und bildet folglich eine Verlängerung des palettenseitigen Triebstocks 21 und damit einen zusätzlich zu dem palettenseitigen Triebstock 21 vorgesehenen Teil des palettenseitigen Getriebeelements 22 des Transfergetriebes 23.

Unmittelbar nach dem Einlaufen der Werkstückpalette 9 in die traggestellseitige Zielposition in dem Arbeitsbereich 3 der Laserschneidvorrichtung 2 greift das motorseitige Triebstockrad 25 in das nach wie vor in den Stillstandszustand geschaltete und folglich weiterhin einen Teil des palettenseitigen Getriebeelements 22 bildende palettenseitige Triebstockrad 18 ein. Das Transfergetriebe 23 befindet sich in einem Außerfunktionsbereitschaftszustand, das Auflageelementgetriebe 19 in einem Funktionsbereitschaftszustand.

In der Zielposition befindet sich die Werkstückpalette 9 an dem Traggestell 27 der maschinellen Anordnung 1 in einer gestellseitigen Position im Arbeitsbereich 3 der Laserschneidvorrichtung 2. In dieser Position ist die Werkstückpalette 9 in herkömmlicher Weise mittels einer Indexierungsvorrichtung mit definierter Anordnung in dem Arbeitsbereich 3 positioniert und außerdem durch eine nicht gezeigte Haltevorrichtung fixiert.

Nun wird die Arretierungsvorrichtung des palettenseitigen Triebstockrads 18 gelöst und das palettenseitige Triebstockrad 18 dadurch in den Bewegungszustand geschaltet. Infolgedessen endet die Funktion des palettenseitigen Triebstockrads 18 als Teil des palettenseitigen Getriebeelements 22 des Transferantriebs 24 für die Werkstückpalette 9 und das palettenseitige Triebstockrad 18 wird zu einem auflageelementseitigen Getriebeelement des Auflageelementgetriebes 19. Es ergeben sich damit die in den Figuren 5a und 5b im Einzelnen gezeigten und in Figur 6b schematisch dargestellten Verhältnisse.

Zum Zeitpunkt des Lösens der Arretierungsvorrichtung für das palettenseitige Triebstockrad 18 ist ausweislich Figur 6b der Kopfkreis der Triebstockverzahnung an dem motorseitigen Triebstockrad 25 von den Bolzen des palettenseitigen Triebstocks 21 geringfügig beabstandet. Der palettenseitige Triebstock 21 liegt folglich außerhalb der Reichweite des motorseitigen Triebstockrads 25. Infolgedessen kann das motorseitige Triebstockrad 25, das bislang als motorseitiges Getriebeelement des Transfergetriebes 23 fungiert hat, nun als motorseitiges Getriebeelement des Auflageelementgetriebes 19 des Auflageantriebs 17 genutzt werden.

Der Transferantriebsmotor 26 wird in seiner Drehrichtung umgesteuert und wird dadurch zu einem Auflageantriebsmotor 31 des Auflageantriebs 17. Der Auflageantriebsmotor 31 treibt das nunmehr als motorseitiges Getriebeelement des Auflageelementgetriebes 19 fungierende motorseitige Triebstockrad 25 mit der gegenüber der Drehrichtung bei der Transferbewegung der Werkstückpalette 9 umgekehrten Drehrichtung um die motorseitige Antriebsradachse 30 an. Das motorseitige Triebstockrad 25 seinerseits treibt das nunmehr ein auflageelementseitiges Getriebeelement des Auflageelementgetriebes 19 ausbildende palettenseitige Triebstockrad 18 mit einer Drehbewegung um die palettenseitige Antriebsradachse 20 an. Mittels des Auflageantriebsmotors 31 und des eine Antriebsverbindung zwischen dem Auflageantriebsmotor 31 und dem Auflageband 14 herstellenden Auflageelementgetriebes 19 wird das Auflageband 14 mit einer Zustellbewegung in der mit der Materialflussrichtung 10 zusammenfallenden Zustellrichtung 15 bewegt.

Die Zustellbewegung 15 wird ausgeführt, um ein auf dem Auflageband 14 abgelegtes Blech 32, wie es in Figur 5a gezeigt ist, in dem Arbeitsbereich 3 der Laserschneidvorrichtung 2 mit einer Positionierbewegung und/oder mit einer Bearbeitungsbewegung relativ zu der Laserschneidvorrichtung 2 der maschinellen Anordnung 1 zu bewegen und um die Produkte der Blechbearbeitung, im Einzelnen aus dem Blech 32 ausgeschnittene Gutteile und ein Restgitter zum Entladen von der Werkstückpalette 9 in der Materialflussrichtung 10 auf die nachgelagerte Werkstückauflage 12 zu schieben. Zweiachsige Bearbeitungsbewegungen parallel zu der Werkstückpalette 9 und einem auf der Werkstückpalette 9 abgelegten Blech 32 werden in jedem Fall und in bekannter Weise von der Laserschneidvorrichtung 2 ausgeführt.

Ein zu bearbeitendes Blech 32 wird der in dem Arbeitsbereich 3 der Laserschneidvorrichtung 2 in der gestellseitigen Position an dem Traggestell 27 angeordneten Werkstückpalette 9 über die vorgelagerte Werkstückauflage 11 zugeführt, die zu diesem Zweck mit ihrer Werkstückseite auf das Niveau der Werkstückseite der Werkstückpalette 9 angehoben ist (Figur 1).

Zum Transfer der Werkstückpalette 9 aus der Position gemäß Figur 1 zurück in die Position gemäß Figur 2 ist zunächst die Fixierung der Werkstückpalette 9 in dem Arbeitsbereich 3 der maschinellen Anordnung 1 zu lösen. Gleichzeitig oder anschließend ist das palettenseitige Triebstockrad 18 aus dem Bewegungszustand in den Stillstandszustand zu schalten. Wird nun der Transferantriebsmotor 26 mit einer der Drehrichtung bei der vorausgegangenen Transferbewegung entgegengesetzten Drehrichtung betrieben, so greift das motorseitige Triebstockrad 25 zunächst in die Verzahnung des still stehenden palettenseitigen Triebstockrads 18 und anschließend in den palettenseitigen Triebstock 21 ein. Dadurch wird die Werkstückpalette 9 in eine Position bewegt, in welcher sie an der Beschickungsöffnung 7 aus der Einhausung 4 der maschinellen Anordnung 1 ragt und von der ausgehend die Werkstückpalette 9 bei abgesenkter vorgelagerter Werkstückauflage 11 entgegen der Transferrichtung 29 manuell in die Position gemäß Figur 2 gezogen werden kann.

Anstelle der aktiven Werkstückpalette 9 kann an der maschinellen Anordnung 1 auch eine herkömmliche originär passive Werkstückpalette mit starr an einem Palettenrahmen angebrachten Auflageleisten eingesetzt werden. Die mit einem zu bearbeitenden Blech beladene passive Werkstückpalette wird mittels des Transferantriebs 24 in den Arbeitsbereich 3 der Laserschneidvorrichtung 2 bewegt. Im Anschluss an Blechbearbeitung wird die nun mit Bearbeitungsprodukten beladene passive Werkstückpalette mittels des Transferantriebs 24 aus dem Arbeitsbereich 3 der Laserschneidvorrichtung 2 abgeführt. Der Auflageantrieb 17 der maschinellen Anordnung 1 und die zugehörigen Funktionen werden an der maschinellen Anordnung 1 bei Einsatz einer passiven Werkstückpalette nicht genutzt.

Sowohl bei Einsatz der aktiven Werkstückpalette 9 als auch bei Einsatz einer passiven Werkstückpalette werden alle wesentlichen Funktionen der maschinellen Anordnung 1 durch eine numerische Maschinensteuerung gesteuert.

## Patentansprüche

1. Maschinelle Anordnung zum Bearbeiten von plattenartigen Werkstücken, insbesondere von Blechen (32),
• mit einer Bearbeitungsvorrichtung (2), die einen Arbeitsbereich (3) aufweist, in welchem ein Werkstück für die Bearbeitungsvorrichtung (2) zur Bearbeitung zugänglich ist,
• mit einer Werkstückpalette (9), die einen Palettenrahmen (13) sowie ein Auflageelement (14) aufweist, das an dem Palettenrahmen (13) angebracht und zur Lagerung eines Werkstücks während der Werkstückbearbeitung und/oder zur Lagerung von Produkten der Werkstückbearbeitung ausgebildet ist,
• mit einem Traggestell (27) für die Werkstückpalette (9), an welchem die Werkstückpalette (9) mit einer gestellseitigen Position im Arbeitsbereich (3) der Bearbeitungsvorrichtung (2) anordenbar ist sowie
• mit einer Transfervorrichtung für die Werkstückpalette (9), mittels derer die Werkstückpalette (9) relativ zu dem Traggestell (27) für die Werkstückpalette (9) mit einer Transferbewegung zwischen einer Position außerhalb des Arbeitsbereichs (3) der Bearbeitungsvorrichtung (2) und der gestellseitigen Position im Arbeitsbereich (3) der Bearbeitungsvorrichtung (2) transferierbar ist,
**dadurch gekennzeichnet, dass**
die Werkstückpalette (9) als aktive Werkstückpalette ausgebildet ist, indem das Auflageelement (14) der Werkstückpalette (9) an dem Palettenrahmen (13) der Werkstückpalette (9) in einer Zustellrichtung (15) bewegbar geführt ist und indem für das Auflageelement (14) ein Auflageantrieb (17) vorgesehen ist, mittels dessen das Auflageelement (14) an der in die gestellseitige Position in dem Arbeitsbereich (3) der Bearbeitungsvorrichtung (2) transferierten Werkstückpalette (9) mit einer Zustellbewegung relativ zu dem Palettenrahmen (13) der Werkstückpalette (9) in der Zustellrichtung (15) antreibbar und dadurch relativ zu dem Arbeitsbereich (3) der Bearbeitungsvorrichtung (2) zustellbar ist.

2. Maschinelle Anordnung nach Anspruch 1, **dadurch gekennzeichnet,**
• **dass** der Auflageantrieb (17) für das Auflageelement (14) einen Auflageantriebsmotor (31) aufweist, der getrennt von der Werkstückpalette (9) angeordnet ist,
• **dass** zwischen dem Auflageantriebsmotor (31) und dem Auflageelement (14) ein in einen Funktionszustand und in einen Außerfunktionszustand schaltbares Auflageelementgetriebe (19) vorgesehen ist, welches ein mittels des Auflageantriebsmotors (31) antreibbares und von der Werkstückpalette (9) getrennt angeordnetes motorseitiges Getriebeelement (25) sowie ein an der Werkstückpalette (9) vorgesehenes und mit dem Auflageelement (14) bewegungsverbundenes auflageelementseitiges Getriebeelement (18) aufweist, wobei das motorseitige Getriebeelement (25) und das auflageelementseitige Getriebeelement (18) des Auflageelementgetriebes (19) zur Herstellung des Funktionszustandes des Auflageelement-getriebes (19) miteinander kuppelbar und zur Herstellung des Außerfunktionszustandes des Auflageelementgetriebes (19) voneinander trennbar sind und
• **dass** das Auflageelement (14) an der in die gestellseitige Position in dem Arbeitsbereich (3) der Bearbeitungsvorrichtung (2) transferierten Werkstückpalette (9) über das in den Funktionszustand geschaltete Auflageelementgetriebe (19) durch den Auflageantriebsmotor (31) mit einer Zustellbewegung antreibbar ist, indem das von dem Auflageantriebsmotor (31) angetriebene motorseitige Getriebeelement (25) des Auflageelement-getriebes (19) das damit gekuppelte auflageelementseitige Getriebeelement (18) des Auflageelementgetriebes (19) mit einer auflageelementseitigen Bewegung antreibt.

3. Maschinelle Anordnung nach einem der vorhergehenden Ansprüche, **dadurch gekennzeichnet,**
• **dass** die Transfervorrichtung für die Werkstückpalette (9) einen Transferantrieb (24) mit einem Transferantriebsmotor (26) aufweist, der getrennt von der Werkstückpalette (9) angeordnet ist,
• **dass** zwischen dem Transferantriebsmotor (26) und der Werkstückpalette (9) ein in einen Funktionszustand und in einen Außerfunktionszustand schaltbares Transfergetriebe (23) vorgesehen ist, welches ein mittels des Transferantriebsmotors (26) antreibbares motorseitiges Getriebeelement (25) sowie ein an der Werkstückpalette (9) vorgesehenes und mit der Werkstückpalette (9) bewegungsverbundenes palettenseitiges Getriebeelement (22) aufweist, wobei das motorseitige Getriebeelement (25) und das palettenseitige Getriebeelement (22) des Transfergetriebes (23) zur Herstellung des Funktionszustandes des Transfergetriebes (23) miteinander kuppelbar und zur Herstellung des Außerfunktionszustandes des Transfergetriebes (23) voneinander trennbar sind und
• **dass** die Werkstückpalette (9) bei der Transferbewegung der Werkstückpalette (9) über das in den Funktionszustand geschaltete Transfergetriebe (23) durch den Transferantriebsmotor (26) mit einer Transferbewegung antreibbar ist, indem das von dem Transferantriebsmotor (26) angetriebene motorseitige Getriebeelement (25) des Transfergetriebes (23) das damit gekuppelte palettenseitige Getriebeelement (22) des Transfergetriebes (23) mit einer palettenseitigen Bewegung antreibt.

4. Maschinelle Anordnung nach Anspruch 2 und Anspruch 3, **dadurch gekennzeichnet,**
• **dass** bei Funktionszustand des Transfergetriebes (23) bei der Transferbewegung der Werkstückpalette (9) das Auflageelementgetriebe (19) in den Außerfunktionszustand geschaltet ist und/oder
• **dass** bei Funktionszustand des Auflageelementgetriebes (19) bei in die gestellseitige Position in dem Arbeitsbereich (3) der Bearbeitungsvorrichtung (2) transferierter Werkstückpalette (9) das Transfergetriebe (23) in den Außerfunktionszustand geschaltet ist.

5. Maschinelle Anordnung nach Anspruch 4, **dadurch gekennzeichnet, dass** aufgrund der Transferbewegung der Werkstückpalette (9) in die gestellseitige Position im Arbeitsbereich der Bearbeitungsvorrichtung das Transfergetriebe (23) in einen Außerfunktionsbereitschaftszustand und das Auflageelementgetriebe (19) in einen Funktionsbereitschaftszustand schaltbar ist.

6. Maschinelle Anordnung wenigstens nach Anspruch 2 und Anspruch 3,
**dadurch gekennzeichnet,**
• **dass** der Auflageantriebsmotor (31) und der Transferantriebsmotor (26) von einem gemeinsamen Antriebsmotor gebildet sind,
• **dass** das motorseitige Getriebeelement (25) des Auflageelementgetriebes (19) und das motorseitige Getriebeelement (25) des Transfergetriebes (23) von einem gemeinsamen motorseitigen Getriebeelement gebildet sind, welches mittels des gemeinsamen Antriebsmotors antreibbar ist,
• **dass** das gemeinsame motorseitige Getriebeelement und das auflageelementseitige Getriebeelement (18) des Auflageelementgetriebes (19) zur Herstellung des Funktionszustandes des Auflageelementgetriebes (19) miteinander kuppelbar und zur Herstellung des Außerfunktionszustandes des Auflageelementgetriebes (19) voneinander trennbar sind,
• **dass** das gemeinsame motorseitige Getriebeelement und das palettenseitige Getriebeelement (22) des Transfergetriebes (23) zur Herstellung des Funktionszustandes des Transfergetriebes (23) miteinander kuppelbar und zur Herstellung des Außerfunktionszustandes des Transfergetriebes (23) voneinander trennbar sind,
• **dass** das Auflageelement (14) an der in die gestellseitige Position in dem Arbeitsbereich (3) der Bearbeitungsvorrichtung (2) transferierten Werkstückpalette (9) über das in den Funktionszustand geschaltete Auflageelementgetriebe (19) durch den gemeinsamen Antriebsmotor mit einer Zustellbewegung antreibbar ist, indem das von dem gemeinsamen Antriebsmotor angetriebene gemeinsame motorseitige Getriebeelement das damit gekuppelte auflageelementseitige Getriebeelement (18) des Auflageelementgetriebes (19) mit einer auflageelementseitigen Bewegung antreibt und
• **dass** die Werkstückpalette (9) bei der Transferbewegung der Werkstückpalette (9) über das in den Funktionszustand geschaltete Transfergetriebe (23) durch den gemeinsamen Antriebsmotor mit einer Transferbewegung antreibbar ist, indem das von dem gemeinsamen Antriebsmotor angetriebene gemeinsame motorseitige Getriebeelement das damit gekuppelte palettenseitige Getriebeelement (22) des Transfergetriebes (23) mit einer palettenseitigen Bewegung antreibt.

7. Maschinelle Anordnung nach Anspruch 6, **dadurch gekennzeichnet,**
• **dass** als gemeinsames motorseitiges Getriebeelement des Auflageelementgetriebes (19) und des Transfergetriebes (23) ein gemeinsames motorseitiges Antriebsrad vorgesehen ist, das mittels des gemeinsamen Antriebsmotors um eine senkrecht zu einer Richtung (29) der Transferbewegung der Werkstückpalette (9) verlaufende motorseitige Antriebsradachse (30) drehbar ist,
• **dass** das palettenseitige Getriebeelement (22) des Transfergetriebes (23) eine palettenseitige Antriebsstange (21) aufweist, die an der Werkstückpalette (9) angebracht ist und an der Werkstückpalette (9) mit einer Länge in der Richtung (29) der Transferbewegung der Werkstückpalette (9) verläuft, wobei das von dem gemeinsamen Antriebsmotor angetriebene gemeinsame motorseitige Antriebsrad die damit gekuppelte palettenseitige Antriebsstange (21) mit einer palettenseitigen Bewegung in der Längsrichtung der palettenseitigen Antriebsstange (21) und dadurch die Werkstückpalette (9) mit der Transferbewegung antreibt,
• **dass** das auflageelementseitige Getriebeelement (18) des Auflageelementgetriebes (19) an der in die gestellseitige Position in dem Arbeitsbereich (3) der Bearbeitungsvorrichtung (2) transferierten Werkstückpalette (9) in einen Bewegungszustand geschaltet ist, in welchem das auflageelementseitige Getriebeelement (18) für eine auflageelementseitige Bewegung freigegeben ist, aufgrund derer das Auflageelement (14) durch den gemeinsamen Antriebsmotor des Auflageantriebs (17) und des Transferantriebs (24) mit einer Zustellbewegung antreibbar ist und
• **dass** das auflageelementseitige Getriebeelement (18) des Auflageelementgetriebes (19) bei der Transferbewegung der Werkstückpalette (9) in einen Stillstandszustand geschaltet ist, in welchem das auflageelementseitige Getriebeelement (18) gegen eine auflageelementseitige Bewegung gesperrt ist und unter Ausbildung einer sich in der Richtung (29) der Transferbewegung erstreckenden Verlängerung der Antriebsstange (21) des Transfergetriebes (23) einen zusätzlich zu der palettenseitigen Antriebsstange (21) vorgesehenen zusätzlichen Teil des palettenseitigen Getriebeelements (22) des Transfergetriebes (23) ausbildet, wobei die Werkstückpalette (9) bei Stillstandszustand des auflageelementseitigen Getriebeelements (18) des Auflageelementgetriebes (19) über das den zusätzlichen Teil des palettenseitigen Getriebeelements (22) des Transfergetriebes (23) ausbildende auflageelementseitige Getriebeelement (18) mit dem gemeinsamen Antriebs-motor des Auflageantriebs (17) und des Transferantriebs (24) antriebsverbunden und durch den gemeinsamen Antriebsmotor des Auflageantriebs (17) und des Transferantriebs (24) mit einer Transferbewegung antreibbar ist.

8. Maschinelle Anordnung nach Anspruch 7, **dadurch gekennzeichnet, dass** als auflageelementseitiges Getriebeelement (18) ein palettenseitiges Antriebsrad vorgesehen ist, das an der Werkstückpalette (9) um eine palettenseitige Antriebsradachse (20) drehbar gelagert ist, die parallel zu der motorseitigen Antriebsradachse (30) des gemeinsamen motorseitigen Antriebsrads des Auflageelementgetriebes (19) und des Transfergetriebes (23) verläuft, wobei das palettenseitige Antriebsrad im Bewegungszustand für eine auflageelementseitige Bewegung in Form einer Drehbewegung um die palettenseitige Antriebsradachse (20) freigegeben ist und im Stillstandszustand gegen eine Drehbewegung um die palettenseitige Antriebsradachse (20) gesperrt ist.

9. Maschinelle Anordnung nach Anspruch 8, **dadurch gekennzeichnet,**
• **dass** als palettenseitige Antriebsstange (21) des Transfergetriebes (23) eine palettenseitige Antriebszahnstange, als palettenseitiges Antriebsrad ein palettenseitiges Antriebszahnrad und als gemeinsames motorseitiges Antriebsrad ein gemeinsames motorseitiges Antriebszahnrad vorgesehen sind, wobei das gemeinsame motorseitige Antriebszahnrad zum Eingriff in die palettenseitige Antriebszahnstange und zum Eingriff in das palettenseitige Antriebszahnrad ausgebildet ist oder
• **dass** als palettenseitige Antriebsstange (21) des Transfergetriebes (23) ein palettenseitiger Triebstock, als palettenseitiges Antriebsrad ein palettenseitiges Triebstockrad und als gemeinsames motorseitiges Antriebsrad ein gemeinsames motorseitiges Triebstockrad vorgesehen sind, wobei das gemeinsame motorseitige Triebstockrad zum Eingriff in den palettenseitigen Triebstock und zum Eingriff in das palettenseitige Triebstockrad ausgebildet ist.

10. Maschinelle Anordnung nach einem der vorhergehenden Ansprüche, **dadurch gekennzeichnet, dass** das Auflageelement (14) als an dem Palettenrahmen (13) in der Zustellrichtung (15) endlos umlaufendes Auflageband ausgebildet ist, das mittels einer Antriebsrolle antreibbbar ist, die ihrerseits eine in Querrichtung der Zustellrichtung (15) des Auflagebands verlaufende Antriebsrollenachse aufweist.

11. Maschinelle Anordnung nach Anspruch 10, **dadurch gekennzeichnet, dass** das Auflageband (14) werkstückseitig mit Auflageleisten (16) versehen ist, die zur Lagerung eines Werkstücks während der Werkstückbearbeitung und/oder zur Lagerung von Produkten der Werkstückbearbeitung ausgebildet sind und die vorzugsweise in Querrichtung der Zustellrichtung (15) des Auflagebands (14) verlaufen und in der Zustellrichtung (15) des Auflagebands (14) voneinander beabstandet sind.

12. Maschinelle Anordnung nach einem der vorhergehenden Ansprüche, **dadurch gekennzeichnet,**
• **dass** der in die gestellseitige Position in dem Arbeitsbereich (3) der Bearbeitungsvorrichtung (2) transferierten Werkstückpalette (9) eine vorgelagerte Werkstückauflage (11) in einer Materialflussrichtung (10) vorgelagert ist und/oder
• **dass** der in die gestellseitige Position in dem Arbeitsbereich (3) der Bearbeitungsvorrichtung (2) transferierten Werkstückpalette (9) eine nachgelagerte Werkstückauflage (12) in einer Materialflussrichtung (10) nachgelagert ist,
• wobei die Werkstückpalette (9) einerseits und die vorgelagerte Werkstückauflage (11) und/oder die nachgelagerte Werkstückauflage (12) andererseits vorzugsweise in einem Gebrauchszustand an Werkstückseiten in der Materialflussrichtung (10) miteinander fluchten.

13. Maschinelle Anordnung nach Anspruch 12, **dadurch gekennzeichnet, dass** eine Hubvorrichtung vorgesehen ist, mittels derer die Werkstückpalette (9) einerseits und die vorgelagerte Werkstückauflage (11) und/oder die nachgelagerte Werkstückauflage (12) andererseits senkrecht zu einer Werkstückauflageebene relativ zueinander zustellbar sind.

14. Maschinelle Anordnung nach Anspruch 13, **dadurch gekennzeichnet, dass** die Werkstückpalette (9) einerseits und die vorgelagerte Werkstückauflage (11) und/oder die nachgelagerte Werkstückauflage (12) andererseits senkrecht zu der Werkstückauflageebene relativ zueinander in Positionen zustellbar sind, aufgrund derer die vorgelagerte Werkstückauflage (11) und/oder die nachgelagerte Werkstückauflage (12) von der Werkstückpalette (9) mit einer mittels der Transfervorrichtung für die Werkstückpalette (9) erzeugten Transferbewegung wenigstens teilweise passierbar ist.

15. Maschinelle Anordnung nach einem der vorhergehenden Ansprüche, **dadurch gekennzeichnet,**
• **dass** zusätzlich zu der als aktive Werkstückpalette ausgebildeten Werkstückpalette (9) eine passive Werkstückpalette vorgesehen ist, die einen Palettenrahmen sowie ein an dem Palettenrahmen starr angebrachtes und zur Lagerung eines Werkstücks während der Werkstückbearbeitung ausgebildetes Auflageelement aufweist,
• **dass** das Traggestell (27) zur wahlweisen Anordnung der aktiven Werkstückpalette oder der passiven Werkstückpalette in der gestellseitigen Position im Arbeitsbereich (3) der Bearbeitungsvorrichtung (2) ausgebildet ist und
• **dass** mittels der Transfervorrichtung wahlweise die aktive Werkstückpalette oder die passive Werkstückpalette relativ zu dem Traggestell (27) mit einer Transferbewegung zwischen einer Position außerhalb des Arbeitsbereichs (3) der Bearbeitungsvorrichtung (2) und der gestellseitigen Position im Arbeitsbereich (3) der Bearbeitungsvorrichtung (2) transferierbar ist.

## Claims

1. Mechanical arrangement for machining plate-like workpieces, in particular metal sheets (32),
• comprising a machining device (2) that has a working region (3) in which a workpiece for the machining device (2) is accessible for machining,
• comprising a workpiece pallet (9) that has a pallet frame (13) and a support element (14) which is attached to the pallet frame (13) and is designed for supporting a workpiece during the workpiece machining and/or for supporting products of the workpiece machining,
• comprising a carrier frame (27) for the workpiece pallet (9), on which frame the workpiece pallet (9) can be arranged in the working region (3) of the machining device (2) with a frame-side position, and
• comprising a transfer device for the workpiece pallet (9), by means of which the workpiece pallet (9) can be transferred, relative to the carrier frame (27) for the workpiece pallet (9), between a position outside the working region (3) of the machining device (2) and the frame-side position in the working region (3) of the machining device (2) with a transfer movement,
**characterized in that**
the workpiece pallet (9) is designed as an active workpiece pallet as the support element (14) of the workpiece pallet (9) is movably guided on the pallet frame (13) of the workpiece pallet (9) in a positioning direction (15) and a support drive (17) is provided for the support element (14), by means of which drive the support element (14), on the workpiece pallet (9) transferred to the frame-side position in the working region (3) of the machining device (2), can be driven with a positioning movement relative to the pallet frame (13) of the workpiece pallet (9) in the positioning direction (15) and thus positioned relative to the working region (3) of the machining device (2).

2. Mechanical arrangement according to claim 1, **characterized in that**
• the support drive (17) for the support element (14) has a support drive motor (31) which is arranged separately from the workpiece pallet (9),
• a support element gear (19) which can be switched to a functional state and to a non-functional state is provided between the support drive motor (31) and the support element (14), which gear has a motor-side gear element (25) that can be driven by means of the support drive motor (31) and is arranged separately from the workpiece pallet (9), and a support-element-side gear element (18) that is provided on the workpiece pallet (9) and is movement-connected to the support element (14), wherein the motor-side gear element (25) the support-element-side gear element (18) of the support element gear (19) can be coupled to one another to produce the functional state of the support element gear (19) and can be separated from one another to produce the non-functional state of the support element gear (19), and
• the support element (14), on the workpiece pallet (9) transferred to the frame-side position in the working region (3) of the machining device (2), can be driven with a positioning movement via the support element gear (19) switched to the functional state by the support drive motor (31), by the motor-side gear element (25) of the support element gear (19), which element is driven by the support drive motor (31), driving the support-element-side gear element (18) of the support element gear (19) coupled thereto with a support-element-side movement.

3. Mechanical arrangement according to either of the preceding claims, **characterized in that**
• the transfer device for the workpiece pallet (9) has a transfer drive (24) having a transfer drive motor (26) which is arranged separately from the workpiece pallet (9),
• a transfer gear (23) which can be switched to a functional state and to a non-functional state is provided between the transfer drive motor (26) and the workpiece pallet (9), which gear has a motor-side gear element (25) that can be driven by means of the transfer drive motor (26), and a pallet-side gear element (22) that is provided on the workpiece pallet (9) and movement-connected to the workpiece pallet (9), wherein the motor-side gear element (25) and the pallet-side gear element (22) of the transfer gear (23) can be coupled to one another to produce the functional state of the transfer gear (23) and can be separated from one another to produce the non-functional state of the transfer gear (23), and
• the workpiece pallet (9) can be driven with a transfer movement during the transfer movement of the workpiece pallet (9) via the transfer gear (23) switched to the functional state by the transfer drive motor (26), by the motor-side gear element (25) of the transfer gear (23), which element is driven by the transfer drive motor (26), driving the pallet-side gear element (22) of the transfer gear (23) coupled thereto with a pallet-side movement.

4. Mechanical arrangement according to claim 2 and claim 3, **characterized in that**
• when the transfer gear (23) is in the functional state during the transfer movement of the workpiece pallet (9), the support element gear (19) is switched to the non-functional state and/or
• when the support element gear (19) is in the functional state and the workpiece pallet (9) has been transferred to the frame-side position in the working region (3) of the machining device (2), the transfer gear (23) is switched to the non-functional state.

5. Mechanical arrangement according to claim 4, **characterized in that**, due to the transfer movement of the workpiece pallet (9) into the frame-side position in the working region of the machining device, the transfer gear (23) can be switched to a non-functional readiness state and the support element gear (19) can be switched to a functional readiness state.

6. Mechanical arrangement at least according to claim 2 and claim 3, **characterized in that**
• the support drive motor (31) and the transfer drive motor (26) are formed by a common drive motor,
• the motor-side gear element (25) of the support element gear (19) and the motor-side gear element (25) of the transfer gear (23) are formed by a common motor-side gear element which can be driven by means of the common drive motor,
• the common motor-side gear element and the support-element-side gear element (18) of the support element gear (19) can be coupled to one another to produce the functional state of the support element gear (19) and can be separated from one another to produce the non-functional state of the support element gear (19),
• the common motor-side gear element and the pallet-side gear element (22) of the transfer gear (23) can be coupled to one another to produce the functional state of the transfer gear (23) and can be separated from one another to produce the non-functional state of the transfer gear (23),
• the support element (14), on the workpiece pallet (9) transferred to the frame-side position in the working region (3) of the machining device (2), can be driven with a positioning movement via the support element gear (19) switched to the functional state by common drive motor, by the common motor-side gear element, which is driven by the common drive motor, driving the support-element-side gear element (18) of the support element gear (19) coupled thereto with a support-element-side movement, and
• the workpiece pallet (9) can be driven with a transfer movement during the transfer movement of the workpiece pallet (9) via the transfer gear (23) switched to the functional state by the common drive motor, by the common motor-side gear element, which is driven by the common drive motor, driving the pallet-side gear element (22) of the transfer gear (23) coupled thereto with a pallet-side movement.

7. Mechanical arrangement according to claim 6, **characterized in that**
• a common motor-side drive wheel is provided as a common motor-side gear element of the support element gear (19) and the transfer gear (23), which drive wheel can be rotated by means of the common drive motor about a motor-side drive wheel axis (30) that extends perpendicularly to a direction (29) of the transfer movement of the workpiece pallet (9),
• the pallet-side gear element (22) of the transfer gear (23) has a pallet-side drive rod (21) which is attached to the workpiece pallet (9) and extends on the workpiece pallet (9) with a length in the direction (29) of the transfer movement of the workpiece pallet (9), wherein the common motor-side drive wheel driven by the common drive motor drives the pallet-side drive rod (21) coupled thereto with a pallet-side movement in the longitudinal direction of the pallet-side drive rod (21) and thus drives the workpiece pallet (9) with the transfer movement,
• the support-element-side gear element (18) of the support element gear (19) on the workpiece pallet (9) transferred to the frame-side position in the working region (3) of the machining device (2) is switched to a movement state in which the support-element-side gear element (18) is released for a support-element-side movement, as a result of which the support element (14) can be driven with a positioning movement by the common drive motor of the support drive (17) and the transfer drive (24) and
• during the transfer movement of the workpiece pallet (9), the support-element-side gear element (18) of the support element gear (19) is switched to a standstill state in which the support-element-side gear element (18) is locked against a support-element-side movement and, by forming an extension of the drive rod (21) of the transfer gear (23) that extends in the direction (29) of the transfer movement, forms an additional part of the pallet-side gear element (22) of the transfer gear (23) that is provided in addition to the pallet-side drive rod (21), wherein the workpiece pallet (9), when the support-element-side gear element (18) of the support element gear (19) is in the standstill state, is drive-connected to the common drive motor of the support drive (17) and the transfer drive (24) via the support-element-side gear element (18) that forms the additional part of the pallet-side gear element (22) of the transfer gear (23) and can be driven with a transfer movement by the common drive motor of the support drive (17) and the transfer drive (24).

8. Mechanical arrangement according to claim 7, **characterized in that** a pallet-side drive wheel is provided as the support-element-side gear element (18), which drive wheel is mounted on the workpiece pallet (9) so as to be rotatable about a pallet-side drive wheel axis (20) that is parallel to the motor-side drive wheel axis (30) of the common motor-side drive wheel of the support element gear (19) and the transfer gear (23), wherein, in the movement state, the pallet-side drive wheel is released for a support-element-side movement in the form of a rotary movement about the pallet-side drive wheel axis (20) and, in the standstill state, is locked against a rotary movement about the pallet-side drive wheel axis (20).

9. Mechanical arrangement according to claim 8, **characterized in that**
• a pallet-side drive rack is provided as the pallet-side drive rod (21) of the transfer gear (23), a pallet-side pinion is provided as the pallet-side drive wheel, and a common motor-side drive pinion is provided as the common motor-side drive wheel, wherein the common motor-side drive pinion is designed to engage with the pallet-side drive rack and to engage with the pallet-side drive pinion, or
• a pallet-side lantern gear is provided as the pallet-side drive rod (21) of the transfer gear (23), a pallet-side lantern pinion is provided as the pallet-side drive wheel, and a common motor-side lantern pinion is provided as the common motor-side drive wheel, wherein the common motor-side drive lantern pinion is designed to engage with the pallet-side lantern gear and to engage with the pallet-side drive lantern pinion.

10. Mechanical arrangement according to any of the preceding claims, **characterized in that** the support element (14) is designed as a support belt which runs endlessly on the pallet frame (13) in the positioning direction (15) and which can be driven by means of a drive roller that has a drive roller axis which extends in the transverse direction of the positioning direction (15) of the support belt.

11. Mechanical arrangement according to claim 10, **characterized in that** the support belt (14) is provided with support slats (16) on the workpiece side, which slats are designed to support a workpiece during the workpiece machining and/or to support products of the workpiece machining and preferably extend in the transverse direction of the positioning direction (15) of the support belt (14) and are spaced apart from one another in the positioning direction (15) of the support belt (14).

12. Mechanical arrangement according to any of the preceding claims, **characterized in that**
• an upstream workpiece support (11) is upstream of the workpiece pallet (9) in a material flow direction (10) when said workpiece pallet (9) is transferred to the frame-side position in the working region (3) of the machining device (2) and/or
• a downstream workpiece support (12) is downstream of the workpiece pallet (9) in a material flow direction (10) when said pallet is transferred to the frame-side position in the working region (3) of the machining device (2),
• wherein the workpiece pallet (9) on the one hand and the upstream workpiece support (11) and/or the downstream workpiece support (12) on the other are preferably flush with one another on workpiece sides in the material flow direction (10) in a use state.

13. Mechanical arrangement according to claim 12, **characterized in that** a lifting device is provided, by means of which the workpiece pallet (9) on the one hand and the upstream workpiece support (11) and/or the downstream workpiece support (12) on the other can be positioned relative to one another perpendicularly to a workpiece support plane.

14. Mechanical arrangement according to claim 13, **characterized in that** the workpiece pallet (9) on the one hand and the upstream workpiece support (11) and/or the downstream workpiece support (12) on the other can be positioned into positions relative to one another perpendicularly to the workpiece support plane, as a result of which positions the upstream workpiece support (11) and/or the downstream workpiece support (12) can be at least partially passed by the workpiece pallet (9) with a transfer movement generated by the transfer device for the workpiece pallet (9).

15. Mechanical arrangement according to any of the preceding claims, **characterized in that**
• in addition to the workpiece pallet (9) designed as an active workpiece pallet, a passive workpiece pallet is provided which has a pallet frame and a support element that is rigidly attached to the pallet frame and designed to support a workpiece during the workpiece machining,
• the carrier frame (27) is designed for selectively arranging the active workpiece pallet or the passive workpiece pallet in the frame-side position in the working region (3) of the machining device (2), and
• the active workpiece pallet or the passive workpiece pallet can selectively be transferred by means of the transfer device with a transfer movement relative to the carrier frame (27) between a position outside the working region (3) of the machining device (2) and the frame-side position in the working region (3) of the machining device (2).

## Revendications

1. Agencement mécanique pour l'usinage de pièces en forme de plaques, en particulier de tôles (32),
- comprenant un dispositif d'usinage (2), qui présente une zone de travail (3), dans laquelle une pièce est accessible au dispositif d'usinage (2) pour l'usinage,
- comprenant une palette de pièce (9), qui présente un cadre de palette (13) ainsi qu'un élément de support (14), qui est disposé sur le cadre de palette (13) et qui est configuré pour supporter une pièce pendant l'usinage de la pièce et/ou pour supporter des produits de l'usinage de la pièce,
- comprenant un châssis porteur (27) pour la palette de pièce (9), sur lequel la palette de pièce (9) peut être agencée avec une position côté châssis dans la zone de travail (3) du dispositif d'usinage (2), ainsi que
- comprenant un dispositif de transfert pour la palette de pièce (9), au moyen duquel la palette de pièce (9) peut être transférée par rapport au châssis porteur (27) pour la palette de pièce (9) avec un mouvement de transfert entre une position en dehors de la zone de travail (3) du dispositif d'usinage (2) et la position côté châssis dans la zone de travail (3) du dispositif d'usinage (2),
**caractérisé en ce que**
la palette de pièce (9) est configurée sous forme de palette de pièce active, par le fait que l'élément de support (14) de la palette de pièce (9) est guidé sur le cadre de palette (13) de la palette de pièce (9) de manière mobile dans une direction de positionnement (15) et par le fait qu'un entraînement de support (17) est prévu pour l'élément de support (14), au moyen duquel l'élément de support (14) peut être entraîné sur la palette de pièce (9) transférée dans la position côté châssis dans la zone de travail (3) du dispositif d'usinage (2) avec un mouvement de positionnement par rapport au cadre de palette (13) de la palette de pièce (9) dans la direction d'avancement (15) et peut ainsi être positionné par rapport à la zone de travail (3) du dispositif d'usinage (2).

2. Agencement mécanique selon la revendication 1, **caractérisé en ce que**
- l'entraînement de support (17) pour l'élément de support (14) présente un moteur d'entraînement de support (31), qui est agencé séparément de la palette de pièce (9),
- entre le moteur d'entraînement de support (31) et l'élément de support (14), est prévue une transmission d'élément de support (19) pouvant être commutée dans un état de fonctionnement et dans un état de non-fonctionnement, qui présente un élément de transmission côté moteur (25), pouvant être entraîné au moyen du moteur d'entraînement de support (31) et agencé séparément de la palette de pièce (9), ainsi qu'un élément de transmission côté élément de support (18), prévu sur la palette de pièce (9) et relié en mouvement à l'élément de support (14), l'élément de transmission côté moteur (25) et l'élément de transmission côté élément de support (18) de la transmission d'élément de support (19) pouvant être couplés l'un à l'autre pour établir l'état de fonctionnement de la transmission d'élément de support (19) et pouvant être séparés l'un de l'autre pour établir l'état de non-fonctionnement de la transmission d'élément de support (19), et
- **en ce que** l'élément de support (14) peut être entraîné avec un mouvement de positionnement par le moteur d'entraînement de support (31) sur la palette de pièce (9) transférée dans la position côté châssis dans la zone de travail (3) du dispositif d'usinage (2) par l'intermédiaire de la transmission d'élément de support (19) commutée dans l'état de fonctionnement, par le fait que l'élément de transmission côté moteur (25) de la transmission d'élément de support (19), entraîné par le moteur d'entraînement de support (31), entraîne l'élément de transmission côté élément de support (18) de la transmission d'élément de support (19), qui lui est couplé, avec un mouvement côté élément de support.

3. Agencement mécanique selon l'une quelconque des revendications précédentes, **caractérisé en ce que**
- le dispositif de transfert pour la palette de pièce (9) présente un entraînement de transfert (24) comprenant un moteur d'entraînement de transfert (26), qui est agencé séparément de la palette de pièce (9),
- entre le moteur d'entraînement de transfert (26) et la palette de pièce (9), est prévue une transmission de transfert (23) pouvant être commutée dans un état de fonctionnement et dans un état de non-fonctionnement, qui présente un élément de transmission côté moteur (25) pouvant être entraîné au moyen du moteur d'entraînement de transfert (26) ainsi qu'un élément de transmission côté palette (22) prévu sur la palette de pièce (9) et relié en mouvement à la palette de pièce (9), l'élément de transmission côté moteur (25) et l'élément de transmission côté palette (22) de la transmission de transfert (23) pouvant être couplés l'un à l'autre pour établir l'état de fonctionnement de la transmission de transfert (23) et pouvant être séparés l'un de l'autre pour établir l'état de non-fonctionnement de la transmission de transfert (23), et
- la palette de pièce (9) peut être entraînée avec un mouvement de transfert par le moteur d'entraînement de transfert (26) lors du mouvement de transfert de la palette de pièce (9) par l'intermédiaire de la transmission de transfert (23) commutée dans l'état de fonctionnement, par le fait que l'élément de transmission côté moteur (25) de la transmission de transfert (23), entraîné par le moteur d'entraînement de transfert (26), entraîne l'élément de transmission côté palette (22) de la transmission de transfert (23), qui lui est couplé, avec un mouvement côté palette.

4. Agencement mécanique selon la revendication 2 et la revendication 3, **caractérisé en ce que**
- à l'état de fonctionnement de la transmission de transfert (23), la transmission d'élément de support (19) est commutée dans l'état de non-fonctionnement lors du mouvement de transfert de la palette de pièce (9) et/ou
- à l'état de fonctionnement de la transmission d'élément de support (19), la transmission de transfert (23) est commutée dans l'état de non-fonctionnement lorsque la palette de pièce (9) est transférée dans la position côté châssis dans la zone de travail (3) du dispositif d'usinage (2).

5. Agencement mécanique selon la revendication 4, **caractérisé en ce qu'**en raison du mouvement de transfert de la palette de pièce (9) dans la position côté châssis dans la zone de travail du dispositif d'usinage, la transmission de transfert (23) peut être commutée dans un état d'attente de non fonctionnement et la transmission d'élément de support (19) dans un état d'attente de fonctionnement.

6. Agencement mécanique selon au moins selon la revendication 2 et la revendication 3, **caractérisé en ce que**
- le moteur d'entraînement de support (31) et le moteur d'entraînement de transfert (26) sont formés par un moteur d'entraînement commun,
- l'élément de transmission côté moteur (25) de la transmission d'élément de support (19) et l'élément de transmission côté moteur (25) de la transmission de transfert (23) sont formés par un élément de transmission commun côté moteur, qui peut être entraîné au moyen du moteur d'entraînement commun,
- l'élément de transmission commun côté moteur et l'élément de transmission côté élément de support (18) de la transmission d'élément de support (19) peuvent être couplés l'un à l'autre pour établir l'état de fonctionnement de la transmission d'élément de support (19) et peuvent être séparés l'un de l'autre pour établir l'état de non-fonctionnement de la transmission d'élément de support (19),
- l'élément de transmission commun côté moteur et l'élément de transmission côté palette (22) de la transmission de transfert (23) peuvent être couplés l'un à l'autre pour établir l'état de fonctionnement de la transmission de transfert (23) et peuvent être séparés l'un de l'autre pour établir l'état de non-fonctionnement de la transmission de transfert (23),
- l'élément de support (14) sur la palette de pièce (9) transférée dans la position côté châssis dans la zone de travail (3) du dispositif d'usinage (2) peut être entraîné par le moteur d'entraînement commun avec un mouvement d'avancement par l'intermédiaire de la transmission d'élément de support (19) commutée dans l'état de fonctionnement, par le fait que l'élément de transmission commun côté moteur entraîné par le moteur d'entraînement commun entraîne l'élément de transmission côté élément de support (18) de la transmission d'élément de support (19), qui lui est couplé, avec un mouvement côté élément de support, et
- la palette de pièce (9) peut être entraînée avec un mouvement de transfert par le moteur d'entraînement commun lors du mouvement de transfert de la palette de pièce (9) par l'intermédiaire de la transmission de transfert (23) commutée dans l'état de fonctionnement, par le fait que l'élément de transmission commun côté moteur entraîné par le moteur d'entraînement commun entraîne l'élément de transmission côté palette (22) de la transmission de transfert (23), qui lui est couplé, avec un mouvement côté palette.

7. Agencement mécanique selon la revendication 6, **caractérisé en ce que**
- une roue d'entraînement commune côté moteur est prévue en tant qu'élément de transmission commun côté moteur de la transmission d'élément de support (19) et de la transmission de transfert (23), qui peut tourner au moyen du moteur d'entraînement commun autour d'un axe de roue d'entraînement côté moteur (30) s'étendant perpendiculairement à une direction (29) du mouvement de transfert de la palette de pièce (9),
- l'élément de transmission côté palette (22) de la transmission de transfert (23) présente une tige d'entraînement côté palette (21), qui est disposée sur la palette de pièce (9) et s'étend sur la palette de pièce (9) avec une longueur dans la direction (29) du mouvement de transfert de la palette de pièce (9), la roue d'entraînement commune côté moteur, entraînée par le moteur d'entraînement commun, entraînant la tige d'entraînement côté palette (21), qui lui est couplée, avec un mouvement côté palette dans la direction longitudinale de la tige d'entraînement côté palette (21), et entraînant ainsi la palette de pièce (9) avec le mouvement de transfert,
- l'élément de transmission côté élément de support (18) de la transmission d'élément de support (19) est commuté, sur la palette de pièce (9) transférée dans la position côté châssis dans la zone de travail (3) du dispositif de traitement (2), dans un état de mouvement dans lequel l'élément de transmission côté élément de support (18) est libéré pour un mouvement côté élément de support, en raison duquel l'élément de support (14) peut être entraîné par le moteur d'entraînement commun de l'entraînement de support (17) et de l'entraînement de transfert (24) avec un mouvement de positionnement et
- l'élément de transmission côté élément de support (18) de la transmission d'élément de support (19) est commuté dans un état d'arrêt lors du mouvement de transfert de la palette de pièce (9), dans lequel l'élément de transmission côté élément de support (18) est bloqué contre un mouvement côté élément de support et forme, en formant un prolongement de la tige d'entraînement (21) de la transmission de transfert (23) s'étendant dans la direction (29) du mouvement de transfert, une partie supplémentaire de l'élément de transmission côté palette (22) de la transmission de transfert (23), prévue en plus de la tige d'entraînement côté palette (21), à l'état d'arrêt de l'élément de transmission côté élément de support (18) de la transmission d'élément de support (19), la palette de pièce (9) étant reliée en entraînement au moteur d'entraînement commun de l'entraînement de support (17) et de l'entraînement de transfert (24) par l'intermédiaire de l'élément de transmission côté élément de support (18) qui forme la partie supplémentaire de l'élément de transmission côté palette (22) de la transmission de transfert (23), et pouvant être entraînée par le moteur d'entraînement commun de l'entraînement de support (17) et de l'entraînement de transfert (24) avec un mouvement de transfert.

8. Agencement mécanique selon la revendication 7, **caractérisé en ce qu'**une roue d'entraînement côté palette est prévue tant qu'élément de transmission côté élément de support (18), qui est montée sur la palette de pièce (9) de manière à pouvoir tourner autour d'un axe de roue d'entraînement côté palette (20), qui s'étend parallèlement à l'axe de roue d'entraînement côté moteur (30) de la roue d'entraînement commune côté moteur de la transmission d'élément de support (19) et de la transmission de transfert (23), la roue d'entraînement côté palette étant libérée dans l'état de mouvement pour un mouvement côté élément de support sous forme d'un mouvement de rotation autour de l'axe de roue d'entraînement côté palette (20) et étant bloquée dans l'état d'arrêt contre un mouvement de rotation autour de l'axe de roue d'entraînement côté palette (20).

9. Agencement mécanique selon la revendication 8, **caractérisé en ce que**
- une crémaillère d'entraînement côté palette est prévue en tant que tige d'entraînement côté palette (21) de la transmission de transfert (23), une roue dentée d'entraînement côté palette est prévue en tant que roue d'entraînement côté palette et une roue dentée d'entraînement commune côté moteur est prévue en tant que roue d'entraînement commune côté moteur, la roue dentée d'entraînement commune côté moteur étant configurée pour s'engager dans la crémaillère d'entraînement côté palette et pour s'engager dans la roue dentée d'entraînement côté palette ou
- un fuseau côté palette est prévu en tant que tige d'entraînement côté palette (21) de la transmission de transfert (23), une roue à fuseau côté palette est prévue en tant que roue d'entraînement côté palette et une roue à fuseau commune côté moteur est prévue en tant que roue d'entraînement commune côté moteur, la roue à fuseau commune côté moteur étant configurée pour s'engager dans le fuseau côté palette et pour s'engager dans la roue à fuseau côté palette.

10. Agencement mécanique selon l'une quelconque des revendications précédentes, **caractérisé en ce que** l'élément de support (14) est configuré sous forme de bande de support circulant sans fin sur le cadre de palette (13) dans la direction de positionnement (15), qui peut être entraînée au moyen d'un rouleau d'entraînement, qui présente de son côté un axe de rouleau d'entraînement s'étendant dans la direction transversale de la direction de positionnement (15) de la bande de support.

11. Agencement mécanique selon la revendication 10, **caractérisé en ce que** la bande de support (14) est pourvue, côté pièce, de barres de support (16) qui sont configurées pour supporter une pièce pendant l'usinage de la pièce et/ou pour supporter des produits de l'usinage de la pièce et qui s'étendent de préférence dans la direction transversale de la direction de positionnement (15) de la bande de support (14) et qui sont espacées les unes des autres dans la direction de positionnement (15) de la bande de support (14).

12. Agencement mécanique selon l'une quelconque des revendications précédentes, **caractérisé en ce que**
- un support de pièce agencé en amont (11) est agencé en amont de la palette de pièce (9) transférée dans la position côté châssis dans la zone de travail (3) du dispositif de travail (2) dans une direction de flux de matériau (10) et/ou
- un support de pièce agencé en aval (12) est agencé en aval de la palette de pièce (9) transférée dans la position côté châssis dans la zone de travail (3) du dispositif de travail (2) dans une direction de flux de matériau (10),
- la palette de pièce (9) d'une part et le support de pièce agencé en amont (11) et/ou le support de pièce agencé en aval (12) d'autre part étant de préférence alignés l'un avec l'autre dans un état d'utilisation sur des côtés de la pièce dans la direction de flux de matériau (10).

13. Agencement mécanique selon la revendication 12, **caractérisé en ce qu'**un dispositif de levage est prévu, au moyen duquel la palette de pièce (9) d'une part et le support de pièce agencé en amont (11) et/ou le support de pièce agencé en aval (12) d'autre part peuvent être positionnés l'un par rapport à l'autre perpendiculairement à un plan de support de pièce.

14. Agencement mécanique selon la revendication 13, **caractérisé en ce que** la palette de pièce (9) d'une part et le support de pièce agencé en amont (11) et/ou le support de pièce agencé en aval (12) d'autre part peuvent être positionnés l'un par rapport à l'autre perpendiculairement au plan de support de pièce dans des positions, en raison desquelles le support de pièce agencé en amont (11) et/ou le support de pièce agencé en aval (12) peut être au moins partiellement passé par la palette de pièce (9) avec un mouvement de transfert généré au moyen du dispositif de transfert pour la palette de pièce (9).

15. Agencement mécanique selon l'une quelconque des revendications précédentes, **caractérisé en ce que**
- en plus de la palette de pièce (9) configurée en tant que palette de pièce active, une palette de pièce passive est prévue, qui présente un cadre de palette ainsi qu'un élément de support disposé de manière rigide sur le cadre de palette et configuré pour supporter une pièce pendant l'usinage de la pièce,
- le châssis porteur (27) est configuré pour l'agencement au choix de la palette de pièce active ou de la palette de pièce passive dans la position côté châssis dans la zone de travail (3) du dispositif d'usinage (2), et
- au moyen du dispositif de transfert, la palette de pièce active ou la palette de pièce passive peut être transférée au choix par rapport au châssis porteur (27) avec un mouvement de transfert entre une position en dehors de la zone de travail (3) du dispositif d'usinage (2) et la position côté châssis dans la zone de travail (3) du dispositif d'usinage (2).
